# EUROPÄISCHE PATENTSCHRIFT

(11) **EP 3 950 268 B1**
(45) Veröffentlichungstag und Bekanntmachung des Hinweises auf die Patenterteilung: **26.07.2023**
(21) Anmeldenummer: 21197945.5
(22) Anmeldetag: 02.08.2018
(51) Int. Cl.: B29C 49/48, B29C 49/06, B29C 49/36, B29C 49/46, B29L 31/00

(54) **VORRICHTUNG UND VERFAHREN ZUM AN- UND ABKUPPELN VON MEDIENKUPPLUNGEN AN DER BODENFORM**
DEVICE AND METHOD FOR COUPLING AND UNCOUPLING MEDIA COUPLINGS TO AND FROM THE BOTTOM MOULD
DISPOSITIF ET PROCÉDÉ D'ACCOUPLEMENT ET DE DÉSACCOUPLEMENT DES ACCOUPLEMENTS POUR FLUIDES SUR LE COFFRAGE DE SOL

(30) Priorität: 02.08.2017 DE 102017117533; 02.08.2017 DE 102017117576; 29.08.2017 DE 102017119817; 29.08.2017 DE 102017119816; 12.12.2017 DE 102017129576
(43) Veröffentlichungstag der Anmeldung: 09.02.2022
(62) Teilanmeldung aus: 18750171.3
(73) Patentinhaber: Krones AG, 93073 Neutraubling (DE)
(72) Erfinder: Hack, Andreas, 93073 Neutraubling (DE); Geltinger, Florian, 93073 Neutraubling (DE)
(74) Vertreter: Bittner, Bernhard

(56) Entgegenhaltungen:
- EP-A2- 2 292 405
- WO-A1-2005/025835
- DE-A1-102009 054 385
- DE-A1-102014 105 762

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik sei langem bekannt. Derartige Vorrichtungen und Verfahren gemäß dem Stand der Technik sind in den Patentschriften DE10-2009-054385A1, DE10-2014-105762A1, EP2292405A2 und WO2005/025835A1 beschrieben.

Die Kunststoffvorformlinge werden hierbei üblicherweise in eine Blasform eingebracht, welche einen Hohlraum ausbildet, der formgebend für die herzustellende Kunststoffbehältnisse ist und innerhalb dessen die Kunststoffvorformlinge durch Beaufschlagung mit einem fließfähigen Medium, wie beispielsweise Druckluft, und durch Strecken mit einer Reckstange zu den Kunststoffbehältnissen umgeformt werden.

Die Blasform besteht dabei üblicherweise aus zwei Seitenteilen und einer Bodenform, wobei zudem auch Einrichtungen bzw. sogenannte Medienkupplungen zur Zuführung eines weiteren fließfähigen Mediums, wie einen Temperiermedium zum Kühlen und/oder Erwärmen der Blasform oder eines Sterilisationsmediums zum Sterilisieren der Blasform, vorhanden sein können. Soll nun eine andere Behälterform, -größe oder -typ hergestellt werden, ist es erforderlich vor einem Austausch der Blasformeinrichtungen auch die an den Blasformen angeordneten Medienkupplungen zu lösen und im Anschluss wieder mit den neuen Blasformen zu verbinden. Aktuell werden diese Medienkupplungen dabei manuell durch einen Bediener an- und abgekuppelt.

Durch dieses manuelle An- bzw. Abkuppeln der Medienkupplungen entstehen allerdings hohe Rüstzeiten und dadurch hohe Maschinenstillstandszeiten. Zudem ist es auch nicht ausgeschlossen, dass durch den Eingriff des Bedieners mögliche Fehler entstehen, wie beispielsweise eine falsch oder nicht richtig bzw. nicht fest genug angeschlossene Medienkupplung oder auch eine Beschädigung der Medienkupplungen. Auch ist durch die im Stand der Technik übliche Vorgehensweise bei einem Blasformenwechsel stets zwingend ein Bediener notwendig.

Der vorliegenden Erfindung liegt daher die Aufgabe zugrunde einen vollautomatischen Wechselprozess zur Verfügung zu stellen, durch welchen insbesondere die Wechselzeiten für die Blasformeinrichtungen, im Vergleich zum Stand der Technik, erheblich verkürzt werden. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist dabei eine Blasformeinrichtung auf, welche wenigstens zwei Seitenteile und eine Bodenform aufweist, welche einen Hohlraum ausbilden innerhalb dessen die Kunststoffvorformlinge zu den Kunststoffbehältnissen umgeformt werden. Weiterhin weist die Vorrichtung eine Wechseleinrichtung auf, welche dazu geeignet und bestimmt ist entweder die komplette Blasformeinrichtung oder nur Teile der Blasformeinrichtung von deren Blasformträgern zu entfernen und/oder an den Blasformträgern anzuordnen, wobei die Bodenform an einer Bodenhalterung angeordnet ist und die Bodenform in einem Wechselbetrieb durch eine Hubbewegung und insbesondere ein Anheben und/oder Absenken der Bodenhalterung mit der Bodenhalterung verbindbar oder von der Bodenhalterung trennbar ist und zwischen der Bodenhalterung und der Bodenform wenigstens eine erste trennbare Medienverbindung vorgesehen ist, über welche der Bodenform ein fließfähiges Medium zuführbar ist und/oder über welche das fließfähige Medium von der Bodenform abführbar ist.

Erfindungsgemäß ist durch das Anheben und/oder Absenken der Bodenhalterung auch die Medienverbindung zwischen der Bodenhalterung und der Bodenform herstellbar und/oder trennbar.

Gegenstand der Erfindung ist demnach ein automatisches An- und Abkuppeln der Medienkupplungen an einer Bodenform in einer Blasstation durch Anheben und Absenken des Bodens bzw. der Bodenhalterung, wobei dies vorzugsweise während eines automatischen Blasformenwechsels, welcher bevorzugt mit Hilfe eines Roboters durchgeführt wird, erfolgt. Unter automatisch wird dabei insbesondere verstanden, dass das An- und/oder Abkuppeln der Medienkupplungen bzw. das Herstellen und/oder Lösen der Medienverbindungen ohne Eingriff bzw. ohne Einwirkung eines Bedieners erfolgt.

Es wird demnach bevorzugt vorgeschlagen eine Strömungsverbindung zu der Bodenform automatisch zu trennen und/oder herzustellen. Somit muss der Bediener bei einem Blasformwechsel nicht einzeln nacheinander die Medienkupplungen der Bodenform an- und abkoppeln, wodurch sich die Rüstzeit verringert.

Bei einer bevorzugten Ausführungsform ist daher durch das Anheben und/oder Absenken der Bodenhalterung zwischen der Bodenhalterung und der Bodenform eine mechanische Verbindung herstellbar und/oder trennbar.

Bei der Wechseleinrichtung handelt es sich bevorzugt um einen Wechselroboter. Die Wechseleinrichtung kann dabei bevorzugt stationär an der Vorrichtung angeordnet sein und ein Teil dieser Vorrichtung sein. Denkbar ist aber auch, dass es sich bei der Wechseleinrichtung um ein mobiles Gerät handelt, welches in seiner Gesamtheit bewegt werden kann und bei der Bedarf an der Vorrichtung angeordnet werden kann. Um eine weitere Zeitersparnis zu ermöglichen, können bevorzugt auch mehrere Wechseleinrichtungen vorgesehen sind, die zeitgleich an verschiedenen Umformungsstationen einen Blasformwechsel vornehmen.

Bei einer bevorzugten Ausführungsform handelt es sich daher bei der Wechseleinrichtung bevorzugt um eine Wechseleinrichtung, welche einen automatischen oder halbautomatischen Wechselvorgang ausführt, und diese Wechseleinrichtung ist insbesondere ein Roboter oder ein Handhabungsmanipulator.

Auch bei einem automatischen Blasformenwechsel mit einem Formwechselrobotersystem ist es erforderlich die Medienverbindung zur Bodenform zu lösen und an der neu eingewechselten Form wiederherzustellen. Vorteilhaft wird demnach mit der Erfindung ein vollautomatischer Blasformenwechsel ermöglicht, da auch die Medienkupplungen automatisch an- bzw. abgekuppelt werden können, wobei auch ein pneumatischer manueller Schnellwechsel ohne aufwendiges An- und Abkuppeln der Medienkupplungen möglich ist.

Bevorzugt wird die wenigstens eine Wechseleinrichtung in einem Wechselbetriebsmodus, in dem wenigstens eine Blasformeinrichtung gewechselt wird und der sich von einem Expansionsbetriebsmodus, in dem die Kunststoffvorformlinge zu Kunststoffbehältnissen expandiert werden, unterscheidet, eingesetzt. Bevorzugt erfolgt demnach das Trennen und/oder Verbinden der Medienverbindungen in einem Wechselbetriebsmodus der Vorrichtung, der sich von einem normalen Betriebsmodus unterscheidet.

Bei der Vorrichtung zum Umformen von Kunststoffvorformlingen zu Kunststoffbehältnissen handelt es sich bevorzugt um eine Umformungsstation, welche eine Vielzahl von Blasformeinrichtungen aufweist, die an einem gemeinsamen beweglichen Träger angeordnet sind. Bei diesem Träger handelt es sich dabei insbesondere um einen drehbaren Träger. Vorteilhaft ist eine Vielzahl derartige Blasformeinrichtungen innerhalb einer Blasmaschine und besonders bevorzugt innerhalb einer Streckblasmaschine angeordnet. Dies bedeutet, dass die Kunststoffvorformlinge durch Beaufschlagung mit Druckluft zu den Kunststoffbehältnissen expandiert werden. Dazu weist die Vorrichtung bevorzugt eine Blasdüse auf, welche an eine Mündung der Kunststoffvorformlinge anlegbar ist, um die Kunststoffvorformlinge so mit Blasluft zu beaufschlagen bzw. mittels Blasluft zu expandieren. Daneben ist bevorzugt auch eine Ventilanordnung vorgesehen, welche die Zuführung der Blasluft an die Kunststoffvorformlinge steuert. Es wäre dabei auch möglich, dass anstatt der Luft eine Flüssigkeit verwendet wird.

Bei einer weiteren vorteilhaften Ausführungsform weisen die Umformungsstationen jeweils Reckstangen auf, welche die Kunststoffvorformlinge in ihrer Längsrichtung dehnen. Besonders bevorzugt ist die Blasmaschine bzw. sind der Träger und die Blasformeinrichtungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen befinden sich dabei bevorzugt außerhalb des Reinraums angeordnet.

Die Blasformeinrichtungen werden dabei bevorzugt innerhalb des Reinraums transportiert, wobei der Reinraum bevorzugt von mehreren Wandungen begrenzt wird. Bevorzugt wird der Reinraum dabei von wenigstens einer stehenden Wandung und einer sich gegenüber dieser stehenden Wandung bewegenden Wandung begrenzt. Dabei kann beispielsweise der Träger, an dem die Blasformen angeordnet sind, bereits eine dieser Wandungen und insbesondere die sich bewegende Wandung aufweisen bzw. ausbilden. Der Reinraum grenzt die Blasformen dabei insbesondere von einer unsterilen Umgebung ab.

Insbesondere findet dabei die Herstellung bzw. Expansion (und auch das Befüllen) der Behälter innerhalb eines Raums mit kontaminationsarmer Umgebung, bei der es sich insbesondere um einen Reinraum handelt, statt. Vorteilhaft umgibt der Reinraum den Transportpfad der Behältnisse zumindest abschnittsweise und bevorzugt zumindest in dem Bereich, in dem die Umformungsstationen und/oder der drehbare Träger angeordnet sind, kanalartig. Vorteilhaft kann die Wechseleinrichtung ebenfalls innerhalb des Reinraumes angeordnet sein, besonders bevorzugt nicht nur in einem Wechselbetriebsmodus sondern auch in einem Expansionsbetriebsmodus der Vorrichtung.

Bei einer bevorzugten Ausführungsform ist die Hubbewegung der Bodenhalterung an eine Öffnungs- und/oder Schließbewegung der Blasformträger gekoppelt. Zum Wechseln der Blasformeinrichtungen ist es erforderlich erst die Blasformträger, an welchen die Blasformeinrichtungen angeordnet sind zu Öffnen und nach dem Einsetzen einer neuen Blasformeinrichtung wieder zu Schließen.

Bei einer weiteren bevorzugten Ausführungsform wird die Hubbewegung der Bodenhalterung über eine Bodenhubkurve gesteuert. Innerhalb der Blasstation bzw. der Umformungsstation ist die Schwenkbewegung beim Öffnen und Schließen der beiden Formträgerhälften mit der Hubbewegung des Bodens über eine Bodenhubkurve und Rollen am Formträger gekoppelt. Es wird daher mit der erfindungsgemäßen Vorrichtung vorgeschlagen die an das Öffnen und Schließen des Formträgers gekoppelte Hubbewegung des Bodens auch zum Trennen und/oder Herstellen der Medienverbindung an der Bodenform zu nutzen.

In einer vorteilhaften Ausführungsform sind in einem vorgegebenen Bereich der Blasform an der Unterseite der Bodenform wenigstens ein und bevorzugt zwei Stecknippel angeordnet und an der Bodenhalterung sind wenigstens ein und bevorzugt zwei Gegenstücke zu diesen Stecknippeln angeordnet. Die Verschlussnippel an der Bodenform sind daher nicht wie bei manuell zu wechselnden Bodenformen seitlich an den Bodenformen angebracht, sondern es sind nach bevorzugt unten gerichtete Stecknippel an der Unterseite der Bodenform vorhanden. Bevorzugt wäre es allerdings auch denkbar, dass die erwähnten Stecknippel an der Bodenhalterung angebracht sind und entsprechend die Gegenstücke hierzu an der Bodenform. Vorteilhaft wird demnach durch die Stecknippel und die Gegenstücke eine Steckverbindung zur Verfügung gestellt, um eine Medienverbindung zwischen der Bodenhalterung und der Bodenform herzustellen und/oder zu trennen. Bevorzugt erfolgt das Herstellen und/oder Trennen dieser Medienverbindung durch eine Vertikalbewegung der Bodenhalterung.

Vorteilhaft kann die Vorrichtung auch ein Ventil aufweisen, welches die Zufuhr und/oder Abfuhr des fließfähigen Mediums zu der Bodenform steuert und insbesondere in einem Wechselmodus der Vorrichtung unterbricht bzw. unterbindet.

Bevorzugt erfolgt dabei auch eine Verriegelung der Bodenform mit der Bodenhalterung automatisch. Bei einer bevorzugten Ausführungsform ist die Bodenform daher mittels eines automatischen Spannsystems mit der Bodenhalterung verriegelbar und/oder von der Bodenhalterung lösbar.

Soll nun eine Blasform in die Umformungsstation eingesetzt werden, wird der Blasformträger bevorzugt (automatisch) geöffnet und der Boden bzw. die Bodenhalterung wird über die Bodenhubkurve nach unten gefahren. Die Wechseleinrichtung bzw. der Roboter setzt dann bevorzugt entweder ein komplettes Formenpaket, bestehend aus zwei Seitenteilen und der Bodenform, oder nur die Bodenform an die vorgesehene Position in der Umformungsstation ein. Durch (automatisches) Schließen des Blasformträgers fährt die Bodenhalterung über die Bodenhubkurve bevorzugt wieder nach oben und die Stecknippel an der Bodenform werden in bzw. an die Gegenstücke gedrückt, vorzugsweise jedoch nicht eingerastet. Durch das automatische Spannsystem wird die Bodenform an der Bodenhalterung fest verriegelt und somit bis zum Lösen dieser Verriegelung dauerhaft an die Bodenhalterung gekoppelt. Somit bleiben auch die Stecknippel an die Gegenstücke gedrückt und die Medienverbindung hergestellt. Beim Entnehmen der Blasform bzw. Bodenform aus der Umformungsstation wird das automatische Spannsystem zum Verriegeln der Bodenform bevorzugt wieder gelöst und die Bodenhalterung fährt durch Öffnen des Formträgers nach unten und somit die Stecknippel und Gegenstücke auseinander. Die Bodenform bzw. die komplette Blasform wird dabei von der Wechseleinrichtung bzw. von dem Wechselroboter gehalten. Somit ist die Medienverbindung zur Bodenform wieder abgekuppelt.

In einer weiteren bevorzugten Ausführungsform ist zwischen der Bodenhalterung und der Bodenform wenigstens eine erste Medienverbindung und eine zweite Medienverbindungen vorgesehen und durch das Anheben und/oder Absenken der Bodenhalterung sind insbesondere zeitgleich beide Medienverbindungen zwischen der Bodenhalterung und der Bodenform herstellbar und/oder trennbar. Bevorzugt sind die Medienverbindungen demnach im Wesentlichen auf einem gleichen Höhenniveau angeordnet.

Bevorzugt können die Medienverbindungen allerdings auch auf voneinander verschiedenen Höhenebenen angeordnet sein. Unter der Höhenebene bzw. dem Höhenniveau wird dabei eine, im Vergleich zur Bodenebene der Vorrichtung, horizontale Ebene verstanden. Bevorzugt sind die Medienverbindungen demnach zeitlich nacheinander herstellbar und/oder trennbar.

Bei einer weiteren bevorzugten Ausführungsform weist jede Medienverbindung einen Kanal auf über welchen der Bodenform das fließfähige Medium zuführbar ist und/oder über welchen das fließfähige Medium von der Bodenform abführbar ist und das fließfähige Medium ist bevorzugt über den Kanal der ersten Medienverbindung der Bodenform zuführbar und über den Kanal der zweiten Medienverbindung von der Bodenform abführbar.

Bei dem fließfähigen Medium handelt es sich bevorzugt um ein Temperiermedium zum Temperieren und bevorzugt zum Kühlen und/oder Erwärmen der Bodenform der Blasformeinrichtung. Bevorzugt handelt es sich bei dem Temperiermedium um ein Kühlwasser und/oder um ein Warmwasser. Dabei könnte es sich bei dem fließfähigen Medium allerdings auch um ein flüssiges oder dampfförmiges Sterilisations- oder Reinigungsmedium handeln, welches der Blasformeinrichtung und insbesondere der Bodenform zum Sterilisieren und/oder Reinigen der Blasformeinrichtung zugeführt wird.

Bevorzugt weist dabei nicht nur die Bodenform derartige Medienverbindungen auf, sondern auch ein oder beide Seitenteile. Bevorzugt ist daher in der Bodenform und/oder in einem Seitenteil und/oder in beiden Seitenteilen der Blasformeinrichtung eine Medienverbindung angeordnet. Bevorzugt sind mehrere Kanäle vorgesehen, so dass die einzelnen Teile der Blasformeinrichtung individuell mit einem fließfähigen Medium versorgt werden können. Dies bietet den Vorteil, dass etwa die einzelnen Teile separat und unabhängig voneinander temperiert werden können. Denkbar ist daher etwa, dass als Kanal wenigstens ein Kühlmittelkanal und/oder ein Wärmemittelkanal vorgesehen ist, der zum Leiten eines fließfähigen Kühlmittels und/oder Wärmemittels zum Kühlen und/oder Erwärmen der Blasformeinrichtung und/oder der Blasformträgereinrichtung dient. Bevorzugt ist wenigstens ein erster Fluidkreislauf vorgesehen, um die Seitenwand zu temperieren, und wenigstens ein weiterer Fluidkreislauf, um die Bodenform zu temperieren.

Die Vorrichtung kann derart ausgebildet sein, dass die Bodenteile und die Seitenteile der Blasformeinrichtungen, bevorzugt gemeinsam und besonders bevorzugt individuell, mit fließfähigem Medium versorgt bzw. temperiert werden können.

In einer weiteren vorteilhaften Ausführungsform sind die vorhandenen Medienverbindungen selbstdichtend ausgestaltet. Dies bietet den Vorteil, dass nicht eigens bei dem Herstellen der Medienverbindung bzw. bei der Herstellung einer Strömungsverbindung eine Abdichtung der Kupplungseinrichtung vorgenommen werden muss, was dann vorteilhaft zu einer kürzeren Rüstzeit beiträgt.

Bei einer bevorzugten Ausführungsform der Wechseleinrichtung weist die Wechseleinrichtung eine Greifeinrichtung zum Greifen der Blasformeinrichtung auf, wobei diese Greifeinrichtung dazu geeignet ist, wahlweise die vollständige Blasformeinrichtung zu wechseln oder nur Teile der Blasformeinrichtung zu wechseln. Bevorzugt ist die Greifeinrichtung derart angeordnet, so dass sie um mehrere Achsen schwenkbar ist.

In einer weiteren vorteilhaften Ausführungsform kann die Bodenform auch manuell eingesetzt und/oder entnommen werden. Zum Entnehmen löst der Bediener dabei bevorzugt das automatische Spannsystem und die Bodenform kann einfach herausgenommen und somit die Medienkupplung gelöst werden. Zum Einsetzen der Bodenform drückt der Bediener die Bodenform bevorzugt an die vorgesehene Position an der Bodenhalterung und verriegelt das automatische Spannsystem. Durch das automatische Spannsystem wird die Bodenform wieder an die Bodenhalterung gezogen, die Stecknippel an die Gegenstücke gepresst und somit die Medienkupplung hergestellt.

Die vorliegende Erfindung ist weiterhin auch auf ein Verfahren zum Umformen von Kunststoffvorformlingen zu Kunststoffbehältnissen mit einer Blasformeinrichtung, welche wenigstens zwei Seitenteile und eine Bodenform aufweist, welche einen Hohlraum ausbilden innerhalb dessen die Kunststoffvorformlinge zu den Kunststoffbehältnissen umgeformt werden gerichtet, wobei eine Wechseleinrichtung vorgesehen ist, welche entweder die komplette Blasformeinrichtung oder nur Teile der Blasformeinrichtung von deren Blasformträgern entfernt und/oder an den Blasformträgern anordnet, wobei die Bodenform an einer Bodenhalterung angeordnet ist und die Bodenform in einem Wechselbetrieb durch eine Hubbewegung und insbesondere ein Anheben und/oder Absenken der Bodenhalterung mit der Bodenhalterung verbunden wird oder von der Bodenhalterung getrennt wird und zwischen der Bodenhalterung und der Bodenform wenigstens eine erste trennbare Medienverbindung vorgesehen ist, über welche der Bodenform ein fließfähiges Medium zugeführt wird und/oder über welche das fließfähige Medium von der Bodenform abgeführt wird.

Erfindungsgemäß wird durch das Anheben und/oder Absenken der Bodenhalterung auch die Medienverbindung zwischen der Bodenhalterung und der Bodenform hergestellt und/oder getrennt.

Es wird demnach auch verfahrensseitig vorgeschlagen, dass während eines Blasformwechsels, ohne Einwirkung eines Bedieners, auch automatisch eine Medienverbindung an der Bodenform getrennt und/oder hergestellt wird.

Unter einem Wechselbetrieb wird dabei ein von dem Betriebsmodus abweichender Modus verstanden, in welchen bevorzugt keine Umformung der Kunststoffvorformlinge zu Kunststoffbehältnissen durchgeführt wird.

Bei der Wechseleinrichtung handelt es sich bevorzugt um einen Wechselroboter, welcher die auszuwechselnden Blasformeinrichtungen bzw. Teile der Blasformeinrichtung mittels einer Greifeinrichtung greift und aus der Vorrichtung entnimmt und eine neue Blasformeinrichtung bzw. Teile der Blasformeinrichtung in die Vorrichtung einbringt.

Bei einer besonders bevorzugten Ausführungsform wird bei einem Öffnen der Blasformträger die Bodenhalterung abgesenkt und/oder bei einem Schließen der Blasformträger die Bodenhalterung angehoben.

Bei einer weiteren bevorzugten Ausführungsform ist zwischen der Bodenhalterung und der Bodenform wenigstens eine erste Medienverbindung und eine zweite Medienverbindung vorgesehen und durch das Anheben und/oder Absenken der Bodenhalterung werden zeitgleich beide Medienverbindungen zwischen der Bodenhalterung und der Bodenform hergestellt und/oder getrennt.

Weitere Vorteile und Ausführungsformen ergeben sich aus den beigefügten Zeichnungen:
Darin zeigen:
- Fig. 1: eine schematische Darstellung einer Vorrichtung zum Umformen von Kunststoffvorformlingen zu Kunststoffbehältnissen; und
- Fig. 2: eine Detailansicht der Vorrichtung zum Umformen von Kunststoffvorformlingen zu Kunststoffbehältnissen.

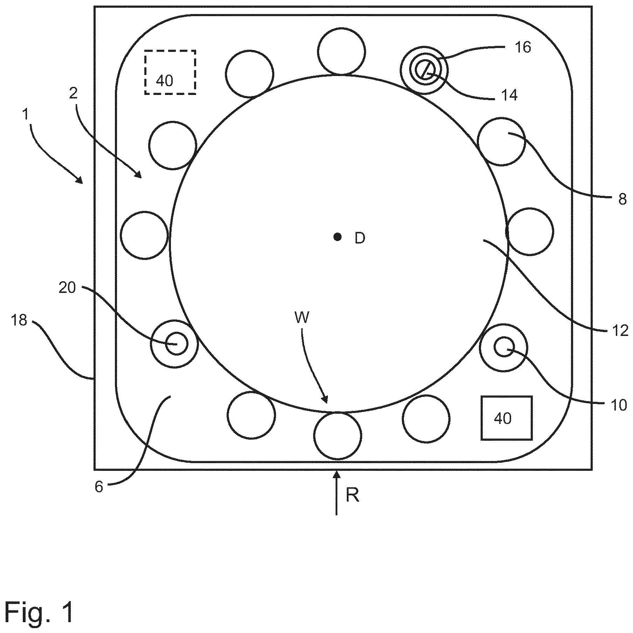

Figur 1 zeigt eine schematische Darstellung einer Vorrichtung 1 zum Umformen von Kunststoffvorformlingen 10 zu Kunststoffbehältnissen 20. Dabei werden die Kunststoffvorformlinge 10 den einzelnen Umformungsstationen 8 zugeführt und, bevorzugt während sie von einer Transporteinrichtung 2 transportiert werden, zu Kunststoffbehältnissen 20 expandiert. Nach dieser Expansion werden die Kunststoffbehältnisse 20 wieder von der Vorrichtung 1 entnommen. Zu diesem Zwecke kann ein (nicht gezeigter) Zuführstern vorgesehen sein, der die Kunststoffvorformlinge der Vorrichtung 1 zuführt, sowie eine (ebenfalls nicht gezeigte) Abführeinrichtung, insbesondere ebenfalls ein Transportstern, der die fertiggestellten Behältnisse 20 von der Vorrichtung abführt. Die Vorrichtung 1 weist einen Stationsträger 12 auf, an dem eine Vielzahl von Umformungsstationen 8 angeordnet ist. Dieser Stationsträger kann dabei beispielsweise, wie in Fig. 1 gezeigt, ein Blasrad sein, welches bezüglich einer Drehachse D (welche hier senkrecht zu der Figurenebene und damit vertikal verläuft) drehbar ist. Jede einzelne Umformungsstation weist dabei jeweils eine Blasformeinrichtung 14 auf. Diese Blasformeinrichtung 14 setzt sich aus zwei Seitenteilen und einem Bodenteil zusammen.

Diese Blasformeinrichtungen können gemäß der Erfindung ausgewechselt werden. Die Blasformeinrichtungen 14 sind dabei an Blasformträgern 16 angeordnet und können von diesen entnommen bzw. an diesen angeordnet werden.

Das Bezugszeichen 40 kennzeichnet eine Wechseleinrichtung, welche dazu dient, die Blasformeinrichtungen von deren Blasformträgern zu entfernen oder die Blasformeinrichtungen an den Blasformträgern anzuordnen. Das Bezugszeichen 6 kennzeichnet einen Basisträger, an dem der Stationsträger 12 drehbar gelagert ist. An bzw. neben dem Basisträger 6 ist bevorzugt auch die Wechseleinrichtung 40 angeordnet. Damit kann die Wechseleinrichtung 40 in die Vorrichtung integriert werden. Das Bezugszeichen 18 kennzeichnet ein Gehäuse, welches zumindest teilweise den Stationsträger 12 umgibt, welches jedoch bevorzugt auch die Wechseleinrichtung 40 einschließen bzw. einhausen kann. Bevorzugt trennt das Gehäuse seinen Innenraum, der als Steril- bzw. Reinraum ausgebildet ist, von einer normalen Atmosphäre ab. Durch die (in der linken Ecke der Vorrichtung) gestrichelt dargestellte Wechseleinrichtung 40 soll dabei verdeutlicht werden, dass die Wechseleinrichtung 40 auch an verschiedenen Positionen der Vorrichtung 1 angeordnet sein kann bzw. auch mehr als eine Wechseleinrichtung 40 an der Vorrichtung 1 vorhanden sein kann.

Das Bezugszeichen W kennzeichnet eine Wechselposition der Vorrichtung 1. Die Blasformeinrichtungen können bevorzugt an einer bestimmten Wechselposition eingewechselt werden. Dies bedeutet, dass die Umformungsstationen durch eine Drehung des Trägers 12 sukzessive in diese Wechselposition W gefahren werden können und in dieser Wechselposition dann die alten Blasformeinrichtungen entnommen und bevorzugt auch neue Blasformeinrichtungen zugeführt werden können. Das Bezugszeichen R kennzeichnet eine radiale Richtung. In dieser radialen Richtung wird die Wechseleinrichtung bzw. eine Greifeinrichtung der Wechseleinrichtung bevorzugt auf die Umformungsstationen bzw. die Blasformeinrichtungen zugestellt, um diese zu wechseln.

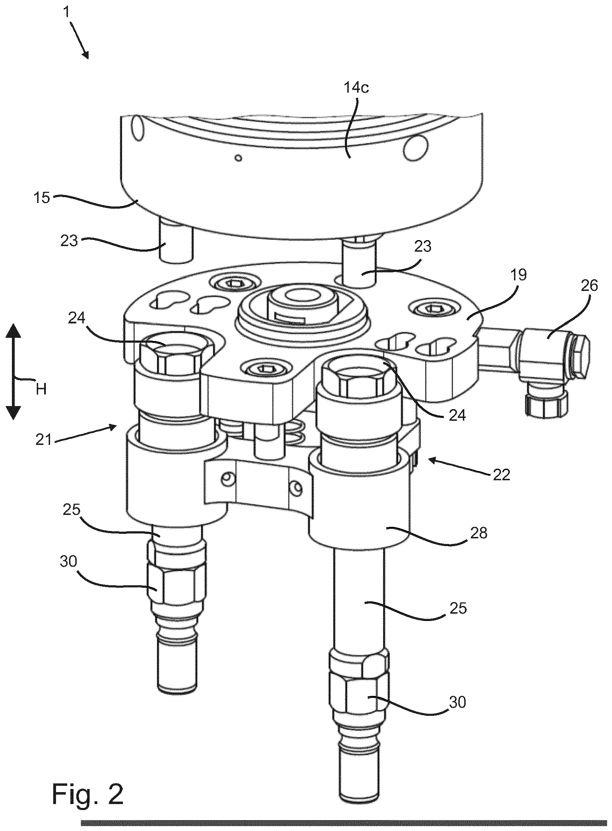

Figur 2 zeigt eine Detailansicht der Vorrichtung 1 zum Umformen von Kunststoffvorformlingen zu Kunststoffbehältnissen, wobei hier insbesondere die Bodenform 14c und die Bodenhalterung 19 in einer abgesenkten Position der Bodenhalterung 19 dargestellt sind. Das Bezugszeichen H kennzeichnet dabei die Hubbewegung der Bodenhalterung 19. An einer Unterseite 15 der Bodenform 14c sind dabei zwei Stecknippel 23 angeordnet, welche in an der Bodenhalterung 19 angeordnete Gegenstücke 24 passen und in einem Zustand, in welchen die Bodenform 14c und die Bodenhalterung 19 miteinander verbunden bzw. miteinander verriegelt sind, eine feste Verbindung herstellen und somit eine Zufuhr und/oder Abfuhr eines fließfähigen Mediums über eine erste und eine zweite 21, 22 Medienverbindung ermöglichen.

Bevorzugt weisen die erste und die zweite Medienverbindung 21, 22 jeweils einen Kanal 25 auf, über welchen das fließfähige Medium zugeführt und/oder abgeführt werden kann, wobei insbesondere auch eine Kupplungseinrichtung 30 vorgesehen sein kann über welche die Medienverbindung 21, 22 vorzugsweise manuell trennbar und/oder herstellbar ist. Das Bezugszeichen 26 kennzeichnet bevorzugt einen weiteren Anschluss, über welchen ebenfalls ein fließfähiges Medium, wie beispielsweise Druckluft, ein Temperiermedium, ein Sterilisationsmedium, ein Reinigungsmedium oder dergleichen zu- und/oder abgeführt werden kann. Weiterhin kann an der Bodenhalterung 19 eine Halterung 28 für die Medienverbindungen 21 und 22 vorgesehen sein.

### Bezugszeichenliste

- 1: Vorrichtung
- 2: Transporteinrichtung
- 6: Basisträger
- 8: Umformungsstation
- 10: Kunststoffvorformling
- 12: Stationsträger
- 14: Blasformeinrichtung
- 14a, 14b: Seitenteile
- 14c: Bodenform
- 15: Unterseite der Bodenform 14c
- 16: Blasformträger
- 18: Gehäuse
- 19: Bodenhalterung
- 20: Kunststoffbehältnis
- 21: erste Medienverbindung
- 22: zweite Medienverbindung
- 23: Stecknippel
- 24: Gegenstück
- 25: Kanal
- 26: Anschluss
- 28: Halterung
- 30: Kupplungseinrichtung
- 40: Wechseleinrichtung

- H: Hubbewegung
- D: Drehachse
- R: radiale Richtung
- W: Wechselposition

## Patentansprüche

1. Vorrichtung (1) zum Umformen von Kunststoffvorformlingen (10) zu Kunststoffbehältnissen (20) mit einer Blasformeinrichtung (14), welche wenigstens zwei Seitenteile (14a, 14b) und eine Bodenform (14c) aufweist, welche einen Hohlraum ausbilden innerhalb dessen die Kunststoffvorformlinge (10) zu den Kunststoffbehältnissen (20) umgeformt werden, wobei die Bodenform (14c) an einer Bodenhalterung (19) angeordnet ist und bevorzugt die Bodenform (14c) in einem Wechselbetrieb durch eine Hubbewegung (H) und insbesondere ein Anheben und/oder Absenken der Bodenhalterung (19) mit der Bodenhalterung (19) verbindbar oder von der Bodenhalterung (19) trennbar ist und zwischen der Bodenhalterung (19) und der Bodenform (14c) wenigstens eine erste trennbare Medienverbindung (21) vorgesehen ist, über welche der Bodenform (14c) ein fließfähiges Medium zuführbar ist und/oder über welche das fließfähige Medium von der Bodenform (14c) abführbar ist,
**dadurch gekennzeichnet, dass**
die Bodenform (14c) manuell einsetzbar und/oder entnehmbar ist, wobei zum Entnehmen die Bodenform (14c) herausgenommen und somit die Medienverbindung (21) gelöst wird.

2. Vorrichtung (1) nach Anspruch 1,
**dadurch gekennzeichnet, dass**
die Hubbewegung (H) der Bodenhalterung (19) an eine Öffnungs- und/oder Schließbewegung der Blasformträger (16) gekoppelt ist.

3. Vorrichtung (1) nach wenigstens einem der vorhergehenden Ansprüche,
**dadurch gekennzeichnet, dass**
die Hubbewegung (H) der Bodenhalterung (19) über eine Bodenhubkurve gesteuert wird.

4. Vorrichtung (1) nach wenigstens einem der vorhergehenden Ansprüche,
**dadurch gekennzeichnet, dass**
an der Unterseite (15) der Bodenform (14c) wenigstens ein und bevorzugt zwei Stecknippel (23) angeordnet sind und an der Bodenhalterung (19) wenigstens ein und bevorzugt zwei Gegenstücke (24) zu diesen Stecknippeln (23) angeordnet sind.

5. Vorrichtung (1) nach wenigstens einem der vorhergehenden Ansprüche,
**dadurch gekennzeichnet, dass**
die Bodenform (14c) mittels eines automatischen Spannsystems mit der Bodenhalterung (19) verriegelbar ist und/oder von der Bodenhalterung (19) lösbar ist.

6. Vorrichtung (1) nach Anspruch 5,
**dadurch gekennzeichnet, dass**
zum Entnehmen der Bodenform (14c) das automatische Spannsystem von einem Bediener gelöst wird.

7. Vorrichtung (1) nach wenigstens einem der vorhergehenden Ansprüche,
**dadurch gekennzeichnet, dass**
der Bediener zum Einsetzen der Bodenform (14c) die Bodenform (14c) an eine vorgesehene Position an der Bodenhalterung (19) drückt und das automatische Spannsystem verriegelt.

8. Vorrichtung (1) nach wenigstens einem der vorhergehenden Ansprüche,
**dadurch gekennzeichnet, dass**
die Bodenform (14c) durch das automatische Spannsystem wieder an die Bodenhalterung gezogen wird, die Stecknippel (23) an die Gegenstücke (24) gepresst werden und somit die Medienverbindung (21) hergestellt wird.

9. Vorrichtung (1) nach wenigstens einem der vorhergehenden Ansprüche,
**dadurch gekennzeichnet, dass**
zwischen der Bodenhalterung (19) und der Bodenform (14c) wenigstens eine erste Medienverbindung (21) und eine zweite Medienverbindungen (22) vorgesehen ist.

10. Vorrichtung (1) nach Anspruch 4,
**dadurch gekennzeichnet, dass**
jede Medienverbindung (21, 22) einen Kanal (25) aufweist über welchen der Bodenform (14c) das fließfähige Medium zuführbar ist und/oder über welchen das fließfähige Medium von der Bodenform (14c) abführbar ist und das fließfähige Medium bevorzugt über den Kanal (25) der ersten Medienverbindung (21) der Bodenform (14c) zuführbar ist und über den Kanal (25) der zweiten Medienverbindung (22) von der Bodenform (14c) abführbar ist.

11. Verfahren zum Umformen von Kunststoffvorformlingen (10) zu Kunststoffbehältnissen (20) mit einer Blasformeinrichtung (14), welche wenigstens zwei Seitenteile (14a, 14b) und eine Bodenform (14c) aufweist, welche einen Hohlraum ausbilden innerhalb dessen die Kunststoffvorformlinge (10) zu den Kunststoffbehältnissen (20) umgeformt werden, wobei die Bodenform (14c) an einer Bodenhalterung (19) angeordnet ist und bevorzugt die Bodenform (14c) in einem Wechselbetrieb durch eine Hubbewegung (H) und insbesondere ein Anheben und/oder Absenken der Bodenhalterung (19) mit der Bodenhalterung (19) verbunden wird oder von der Bodenhalterung (19) getrennt wird und zwischen der Bodenhalterung (19) und der Bodenform (14c) wenigstens eine erste trennbare Medienverbindung (21) vorgesehen ist, über welche der Bodenform (14c) ein fließfähiges Medium zugeführt wird und/oder über welche das fließfähige Medium von der Bodenform (14c) abgeführt wird,
**dadurch gekennzeichnet, dass**
die Bodenform (14c) manuell eingesetzt und/oder entnommen wird, wobei zum Entnehmen die Bodenform (14c) herausgenommen und somit die Medienverbindung (21) gelöst wird.

12. Verfahren nach Anspruch 11,
**dadurch gekennzeichnet, dass**
bei einem Öffnen der Blasformträger (16) die Bodenhalterung (19) abgesenkt wird und/oder bei einem Schließen der Blasformträger (16) die Bodenhalterung (19) angehoben wird.

13. Verfahren nach wenigstens einem der vorhergehenden Ansprüche,
**dadurch gekennzeichnet, dass**
zwischen der Bodenhalterung (19) und der Bodenform (14c) wenigstens eine erste Medienverbindung (21) und eine zweite Medienverbindung (22) vorgesehen ist und durch das Anheben und/oder Absenken der Bodenhalterung (19) zeitgleich beide Medienverbindungen (21, 22) zwischen der Bodenhalterung (19) und der Bodenform (14c) hergestellt und/oder getrennt werden.

## Claims

1. Apparatus (1) for reshaping plastic preforms (10) into plastic containers (20) has a blow moulding device (14) which has at least two side parts (14a, 14b) and a base mould (14c) which form a hollow space inside which the plastic preforms (10) are reshaped into the plastic containers (20), wherein the base mould (14c) is arranged on a base mounting (19), and preferably in a changing mode, through a lifting movement (H) and in particular a lifting and/or lowering of the base mounting (19), the base mould (14c) can be connected to the base mounting (19) or can be disconnected from the base mounting (19), and between the base mounting (19) and the base mould (14c) at least one first disconnectable media connection (21) is provided, by means of which a flowable medium can be supplied to the base mould (14c) and/or by means of which the flowable medium can be discharged from the base mould (14c),
**characterised in that**
the base mould (14c) can be inserted and/or removed manually, wherein for removal the base mould (14c) is removed and the thus the media connection (21) is released.

2. Apparatus (1) according to claim 1,
**characterised in that**
the lifting movement (H) of the base mounting (19) is coupled to an opening and/or closing movement of the blow mould supports (16).

3. Apparatus (1) according to at least one of the preceding claims,
**characterised in that**
the lifting movement (H) of the base mounting (19) is controlled by means of a base lifting cam.

4. Apparatus (1) according to at least one of the preceding claims,
**characterised in that**
at least one and preferably two plug nipples (23) are arranged on the underside (15) of the base mould (14c) and at least one and preferably two counterpart pieces (24) to this plug nipple (23) are arranged on the base mounting (19).

5. Apparatus (1) according to at least one of the preceding claims,
**characterised in that**
by means of an automatic clamping system the base mould (14c) can be latched to the base mounting (19) and/or can be released from the base mounting (19).

6. Apparatus (1) according to claim 5,
**characterised in that**
for removal of the base mould (14c) the automatic clamping system is released by an operator.

7. Apparatus (1) according to at least one of the preceding claims,
**characterised in that**
for insertion of the base mould (14c) the operator presses the base mould (14c) onto a provided position on the base mounting (19) and latches the automatic clamping system.

8. Apparatus (1) according to at least one of the preceding claims,
**characterised in that**
due to the automatic clamping system the base mould (14c) is again drawn onto the base mounting, the plug nipples (23) are pressed onto the counterpart pieces (24) and thus the media coupling (21) is created.

9. Apparatus (1) according to at least one of the preceding claims,
**characterised in that**
between the base mounting (19) and the base mould (14c) at least one first media connection (21) and a second media connection (22) is provided.

10. Apparatus (1) according to claim 4,
**characterised in that**
each media connection (21, 22) has a channel (25) by means of which the flowable medium can be supplied to the base mould (14c) and/or by means of which the flowable medium can be discharged from the base mould (14c) and the flowable medium can preferably be fed via the channel (25) of the first media connection (21) to the base mould (14c) and can be discharged from the base mould (14c) via the channel (25) of the second media connection (22).

11. Method for reshaping plastic preforms (10) into plastic containers (20) has a blow moulding device (14) which has at least two side parts (14a, 14b) and a base mould (14c) which form a hollow space inside which the plastic preforms (10) are reshaped into the plastic containers (20), wherein the base mould (14c) is arranged on a base mounting (19), and preferably in a changing mode, through a lifting movement (H) and in particular a lifting and/or lowering of the base mounting (19), the base mould (14c) is connected to the base mounting (19) or is disconnected from the base mounting (19), and between the base mounting (19) and the base mould (14c) at least one first disconnectable media connection (21) is provided, by means of which a flowable medium is supplied to the base mould (14c) and/or by means of which the flowable medium is discharged from the base mould (14c),
**characterised in that**
the base mould (14c) is inserted and/or removed manually, wherein for removal the base mould (14c) is removed and the thus the media connection (21) is released.

12. Method according to claim 11,
**characterised in that**
upon opening of the blow mould support (16) the base mounting (19) is lowered and/or upon closing of the blow mould support (16) the base mounting (19) is raised.

13. Method according to at least one of the preceding claims,
**characterised in that**
between the base mounting (19) and the base mould (14c) at least one first media connection (21) and a second media connection (22) is provided, and simultaneously both media connections (21, 22) between the base mounting (19) and the base mould (14c) is made and/or is broken by the lifting and/or lowering of the base mounting (19).

## Revendications

1. Dispositif (1) de façonnage de préformes en matière plastique (10) en des récipients en matière plastique (20) avec un système de moulage par soufflage (14), lequel présente au moins deux parties latérales (14a, 14b) et une forme de fond (14c), lesquels réalisent une cavité, à l'intérieur de laquelle les préformes en matière plastique (10) sont façonnées en récipients en matière plastique (20), dans lequel la forme de fond (14c) est disposée sur une fixation de fond (19) et de préférence la forme de fond (14c) peut être reliée à la fixation de fond (19) ou peut être séparée de la fixation de fond (19) dans un mode de changement par un déplacement de levage (H) et en particulier par un soulèvement et/ou abaissement de la fixation de fond (19) et au moins une première liaison fluidique (21) pouvant être séparée est prévue entre la fixation de fond (19) et la forme de fond (14c), par l'intermédiaire de laquelle un milieu coulant peut être amené à la forme de fond (14c) et/ou par l'intermédiaire de laquelle le milieu coulant peut être évacué de la forme de fond (14c),
**caractérisé en ce que**
la forme de fond (14c) peut être insérée et/ou retirée manuellement, la forme de fond (14c) étant retirée pour le retrait et la liaison fluidique (21) étant ainsi interrompue.

2. Dispositif (1) selon la revendication 1,
**caractérisé en ce que**
le déplacement de levage (H) de la fixation de fond (19) est couplé à un déplacement d'ouverture et/ou de fermeture des supports de moule de soufflage (16).

3. Dispositif (1) selon au moins l'une quelconque des revendications précédentes,
**caractérisé en ce que**
le déplacement de levage (H) de la fixation de fond (19) est commandé par l'intermédiaire d'une came de levage de fond.

4. Dispositif (1) selon au moins l'une quelconque des revendications précédentes,
**caractérisé en ce que**
au moins un et de manière préférée deux embouts enfichables (23) sont disposés sur le côté inférieur (15) de la forme de fond (14c) et au moins une et de manière préférée deux contre-pièces (24) par rapport auxdits embouts enfichables (23) sont disposées sur la fixation de fond (19).

5. Dispositif (1) selon au moins l'une quelconque des revendications précédentes,
**caractérisé en ce que**
la forme de fond (14c) peut être verrouillée à la fixation de fond (19) et/ou peut être desserrée de la fixation de fond (19) au moyen d'un système de serrage automatique.

6. Dispositif (1) selon la revendication 5,
**caractérisé en ce que**
pour le retrait de la forme de fond (14c), le système de serrage automatique est désseré par un opérateur.

7. Dispositif (1) au moins l'une quelconque des revendications précédentes,
**caractérisé en ce que**
l'opérateur, pour l'insertion du moule de fond (14c), pousse le moule de fond (14c) vers une position prédéterminée sur la fixation de fond (19) et verrouille le système de serrage automatique.

8. Dispositif (1) au moins l'une quelconque des revendications précédentes,
**caractérisé en ce que**
la forme de fond (14c) est à nouveau tirée sur la fixation de fond par le système de serrage automatique, les embouts enfichables (23) étant pressés sur les contre-pièces (24) et la liaison fluidique (21) étant ainsi établie.

9. Dispositif (1) selon au moins l'une quelconque des revendications précédentes,
**caractérisé en ce que**
au moins une première liaison fluidique (21) et une deuxième liaison fluidique (22) sont prévues entre la fixation de fond (19) et la forme de fond (14c).

10. Dispositif (1) selon la revendication 4,
**caractérisé en ce que**
chaque liaison fluidique (21, 22) présente un canal (25), par l'intermédiaire duquel le milieu coulant peut être amené à la forme de fond (14c) et/ou par l'intermédiaire duquel le milieu coulant peut être évacué de la forme de fond (14c) et le milieu coulant peut être amené de manière préférée par l'intermédiaire du canal (25) de la première liaison fluidique (21) à la forme de fond (14c) et peut être évacué par l'intermédiaire du canal (25) de la deuxième liaison fluidique (22) de la forme de fond (14c).

11. Procédé pour façonner des préformes en matière plastique (10) en des récipients en matière plastique (20) avec un système de moulage par soufflage (14), lequel présente au moins deux parties latérales (14a, 14b) et une forme de fond (14c), lesquels réalisent une cavité à l'intérieur de laquelle les préformes en matière plastique (10) sont façonnées en récipients en matière plastique (20), dans lequel la forme de fond (14c) est disposée sur une fixation de fond (19) et de préférence la forme de fond (14c) est reliée à la fixation de fond (19) ou est séparée de la fixation de fond (19) dans un mode de changement par un déplacement de levage (H) et en particulier par un soulèvement et/ou abaissement de la fixation de fond (19) et au moins une première liaison fluidique (21) pouvant être séparée est prévue entre la fixation de fond (19) et la forme de fond (14c), par l'intermédiaire de laquelle un milieu coulant est amené à la forme de fond (14c) et/ou par l'intermédiaire de laquelle le milieu coulant est évacué de la forme de fond (14c),
**caractérisé en ce que**
la forme de fond (14c) est insérée et/ou retirée manuellement, la forme de fond (14c) étant retirée pour le retrait et la liaison fluidique (21) étant ainsi interrompue.

12. Procédé selon la revendication 11,
**caractérisé en ce que**
la fixation de fond (19) est abaissée lors d'une ouverture des supports de moule de soufflage (16) et/ou la fixation de fond (19) est soulevée lors d'une fermeture des supports de moule de soufflage (16).

13. Procédé selon au moins l'une quelconque des revendications précédentes,
**caractérisé en ce que**
au moins une première liaison fluidique (21) et une deuxième liaison fluidique (22) sont prévues entre la fixation de fond (19) et la forme de fond (14c) et les deux liaisons fluidiques (21, 22) sont établies et/ou séparées dans le même temps entre la fixation de fond (19) et la forme de fond (14c) en soulevant et/ou en abaissant la fixation de fond (19).
